# EUROPÄISCHE PATENTSCHRIFT

(11) **EP 2 392 447 B1**
(45) Veröffentlichungstag und Bekanntmachung des Hinweises auf die Patenterteilung: **27.02.2019**
(21) Anmeldenummer: 11161447.5
(22) Anmeldetag: 07.04.2011
(51) Int. Cl.: B29C 49/42, B29C 49/64, B29C 49/78, B29C 49/00, B29C 49/02, B29C 49/06

(54) **Vorrichtung und Verfahren zum Herstellen von Kunststoffbehältern**
Device and method for manufacturing plastic containers
Dispositif et procédé de fabrication de récipients en plastique

(30) Priorität: 02.06.2010 DE 102010029644
(43) Veröffentlichungstag der Anmeldung: 07.12.2011
(60) Teilanmeldung: 19152017.0
(73) Patentinhaber: Krones AG, 93073 Neutraubling (DE)
(72) Erfinder: Lappe, Ulrich, 93059 Regensburg (DE); Senn, Konrad, 93059 Regensburg (DE)
(74) Vertreter: Grünecker Patent- und Rechtsanwälte PartG mbB

(56) Entgegenhaltungen:
- DE-A1- 10 026 368
- DE-A1- 19 843 053
- DE-A1-102008 024 108
- US-B1- 6 409 946
- US-B2- 7 491 358

## Beschreibung

Die Erfindung betrifft eine Vorrichtung und ein Verfahren zum Herstellen von Kunststoffbehältern.

Kunststoffbehälter, beispielsweise Kunststoffflaschen, werden üblicherweise mit sogenannten Blasmaschinen erzeugt. In solchen Blasmaschinen werden Kunststoffvorformlinge, die zuvor in einer Temperiereinrichtung erwärmt wurden, in Blasformen zu den gewünschten Kunststoffbehältern ausgeformt. Dafür werden die Vorformlinge in den Blasformen mit Druckluft beaufschlagt.

Das thermische Konditionieren der Vorformlinge in einer der Blasmaschine vorgeschalteten Temperiereinrichtung ist notwendig, um das Kunststoffmaterial der Vorformlinge verformbar zu machen. Um eine konstante Qualität der erzeugten Kunststoffbehälter zu gewährleisten, ist es notwendig, dass die Vorformlinge beim Blasvorgang eine genau definierte Temperierung aufweisen.

Üblicherweise werden die Vorformlinge zuvor als Spritzgussteile, also in einem Spritzgießverfahren, hergestellt. Dabei ist es vorteilhaft, die Vorformlinge im Taktverfahren herzustellen, wobei mehrere Vorformlinge gleichzeitig in einem Spritzgießvorgang erzeugt werden. Eine getaktete Spritzmaschine kann auch mit einer Blasmaschine geblockt werden, um den Herstellungsprozess der Vorformlinge und der Kunststoffbehälter zu kombinieren. Ein derartiges Blocksystem ist beispielsweise aus der DE 697 12 130 bekannt.

Wenn eine getaktete Spritzmaschine geblockt mit einer kontinuierlich arbeitenden Streckblasmaschine, genauer gesagt geblockt mit einem Blasrad und einer Temperiereinrichtung betrieben wird, müssen die gleichzeitig hergestellten Vorformlinge jedoch zunächst in eine Reihe gebracht werden, um dann in die Temperiereinrichtung eingebracht werden zu können. Dadurch weisen die zuletzt in die Temperiereinrichtung eingebrachten Vorformlinge üblicherweise eine geringere Temperatur auf als die zuvor eingebrachten Vorformlinge. Auch andere Faktoren, wie beispielsweise die Werkzeugtemperaturen beim Spritzgießen, können zu variierenden Temperaturen der erzeugten Vorformlinge führen.

Eine solche unterschiedliche oder variierende Temperatur der Vorformlinge kann zu einer variierenden Qualität bei den hergestellten Kunststoffbehältern führen.

Aus der DE 198 43 053 A1 ist es bekannt, dass zur Kompensation einer relativ zueinander ungleichmässigen Temperaturverteilung im Material der Vorformlinge mindestens ein Blasparameter bei der Umformung der Vorformlinge zu den Behältern relativ zueinander derart unterschiedlich vorgegeben wird, dass eine Kompensation der ungleichmäßigen Temperaturverteilung derart erfolgt, dass nach einer Beendigung des Blasvorganges Behälter mit näherungsweise identischer räumlicher Verteilung von Wandmaterial, Orientierungsverlauf und Kristallisationscharakteristik vorliegen.

Die DE 10 2008 024 108 A1 offenbart eine Vorrichtung zum Erwärmen von Kunststoffbehältnissen und insbesondere von Kunststoffvorformlingen mit einer Transporteinrichtung, welche die Kunststoffbehältnisse entlang eines vorbestimmten Transportpfades transportiert, mit einer Mikrowellenerzeugungseinrichtung, und mit einer Leitungseinrichtung, welche die Mikrowellen in Richtung der zu erwärmenden Kunststoffbehältnisse leitet, wobei diese Leitungseinrichtung wenigstens abschnittsweise als Hohlleiter ausgeführt ist. Die Vorrichtung weist eine Steuereinrichtung auf, welche derart gestaltet ist, dass sie die auf die Kunststoffbehältnisse treffende Mikrowellenenergie während des Erwärmungsvorgangs steuert.

Die DE 100 26 368 A1 offenbart ein Verfahren zur Herstellung von Vorformlingen durch Einspritzen von thermoplastischem Kunststoff in einer Mehrzahl von Kavitäten, aus denen die Vorformlinge nach einer Verfestigung durch Abkühlung entnommen werden. Es ist vorgesehen, dass eine Kühleinrichtung eine Steuerung zur Vorgabe einer ungleichmäßigen Abkühlung der Vorformlinge in den Kavitäten aufweist.

Es ist Aufgabe der vorliegenden Erfindung, eine Vorrichtung und ein Verfahren zum Herstellen von Kunststoffbehältern bereitzustellen, welche eine Herstellung von Kunststoffbehältern mit möglichst gleichbleibender Qualität erlauben.

Die Erfindung stellt eine Vorrichtung zum Herstellen von Kunststoffbehältern bereit, umfassend eine getaktete Vorformlingsherstellungseinrichtung, eine Temperiereinrichtung zum thermischen Konditionieren von in der Vorformlingsherstellungseinrichtung hergestellten Vorformlingen und eine kontinuierlich arbeitende Blasmaschine, wobei die Temperiereinrichtung derart ausgebildet und/oder konfiguriert ist, dass Vorformlinge, die in einem Takt der Vorformlingsherstellungseinrichtung hergestellt wurden, verschieden temperiert werden können.

Dadurch, dass die Vorformlinge verschieden temperiert werden können, können auch Vorformlinge, die mit unterschiedlicher Temperatur in die Temperiereinrichtung eingebracht werden, mit derselben vorherbestimmten Temperierung versehen werden, was eine konstante Qualität der hergestellten Kunststoffbehälter ermöglicht.

Mit anderen Worten können die Vorformlinge, die in einem Takt der Vorformlingsherstellungseinrichtung hergestellt wurden, individuell, insbesondere unabhängig voneinander, temperiert werden.

Die hergestellten Kunststoffbehälter können insbesondere Kunststoffflaschen sein.

Unter Temperieren kann hier ein Erwärmen und/oder Abkühlen eines Vorformlings verstanden werden. Insbesondere kann unter Temperieren ein Versehen eines Vorformlings mit einem vorherbestimmten Temperaturprofil verstanden werden. Das vorherbestimmte Temperaturprofil kann entlang einer Längsachse und/oder entlang des Umfangs des Vorformlings variieren (sogenanntes "preferential heating"). Das vorherbestimmte Temperaturprofil kann auch konstant sein. In diesem Fall kann der Vorformling also auf eine konstante Temperatur gebracht werden.

Unter verschieden Temperieren kann in diesem Zusammenhang insbesondere verstanden werden, dass wenigstens zwei Vorformlinge, die in einem Takt der Vorformlingsherstellungseinrichtung hergestellt wurden, mittels voneinander unterschiedlichen Temperierungsverfahren temperiert werden können.

Unterschiedliche Temperierungsverfahren können sich durch ein oder mehrere verwendete Heizelemente und/oder Kühlelemente der Temperiereinrichtung und/oder durch ein oder mehrere verwendete Temperierparameterwerte unterscheiden.

Die Temperiereinrichtung kann also ein oder mehrere Heizelemente zum Erwärmen von Vorformlingen und/oder ein oder mehrere Kühlelemente zum Kühlen von Vorformlingen umfassen.

Ein Temperierparameter kann beispielsweise eine Heizdauer oder eine Kühldauer oder eine Frequenz und/oder Intensität einer zum Heizen verwendeten Strahlung sein. Heizelemente der Temperiereinrichtung können beispielsweise Mikrowellenheizelemente, Infrarotheizelemente, Laserheizelemente, und/oder Heiztaschen sein. Kühlelemente der Temperiereinrichtung können insbesondere Kühlluftelemente sein.

Wenigstens zwei Vorformlinge, die in einem Takt der Vorformlingsherstellungseinrichtung hergestellt wurden, können also durch voneinander unterschiedliche Heizelemente und/oder Kühlelemente der Temperiereinrichtung und/oder unterschiedlich lange und/oder mit unterschiedlichen Frequenzen und/oder Intensitäten der zum Heizen verwendeten Strahlung temperiert werden.

Die Temperiereinrichtung kann einer kontinuierlich arbeitenden Temperiereinrichtung entsprechen.

Die Blasmaschine kann insbesondere ein Blasrad umfassen. Die Temperiereinrichtung kann Teil der Blasmaschine sein.

Die Temperiereinrichtung kann insbesondere derart ausgebildet und/oder konfiguriert sein, dass alle in einem Takt der Vorformlingsherstellungseinrichtung hergestellten Vorformlinge beim Einlauf in das Blasrad dieselbe Temperierung, insbesondere dasselbe Temperaturprofil, aufweisen.

Die Vorformlingsherstellungseinrichtung, die Temperiereinrichtung und die Blasmaschine können insbesondere geblockt sein. Mit anderen Worten kann die Vorrichtung zum Herstellen von Kunststoffbehältern eine Blockmaschine umfassend die Vorformlingsherstellungseinrichtung, die Temperiereinrichtung und die Blasmaschine sein.

Die Vorrichtung zum Herstellen von Kunststoffbehältern kann außerdem, insbesondere im Block mit der Vorformlingsherstellungseinrichtung, der Temperiereinrichtung und der Blasmaschine, eine Kunststoffrecyclingvorrichtung umfassen. Die Kunststoffrecyclingvorrichtung kann aus recycelten Kunststoffbehältern den Kunststoff für die Vorformlingsherstellungseinrichtung bereitstellen. Damit kann die Umweltbilanz der hergestellten Kunststoffbehälter verbessert werden.

In der getakteten Vorformlingsherstellungseinrichtung können also Vorformlinge in einem diskontinuierlichen Produktionsverfahren, vorzugsweise in einem Batchbetrieb, hergestellt werden. Mit anderen Worten kann eine vorherbestimmte Anzahl von Vorformlingen innerhalb eines Taktes hergestellt werden. Damit kann eine kosteneffiziente Herstellung von Vorformlingen ermöglicht werden.

Die getaktete Vorformlingsherstellungseinrichtung kann insbesondere eine getaktete Spritzgießeinrichtung sein, insbesondere in welcher eine vorherbestimmte Anzahl von Vorformlingen innerhalb eines Taktes spritzgegossen werden können.

Die getaktete Vorformlingsherstellungseinrichtung kann vorzugsweise ein Compounder mit Doppelschneckenextruder sein, bei dem anstatt eines Trockners eine Vakuumentgasung vorgesehen ist. Dies ermöglicht eine energieeffiziente Herstellung der Vorformlinge, da die Dauer der bei PET notwendigen Materialtrocknung verkürzt werden kann.

Die Vorrichtung zum Herstellen von Kunststoffbehältern kann außerdem ein Transferelement zwischen der Vorformlingsherstellungseinrichtung und der Temperiereinrichtung umfassen. Durch die Transfereinrichtung können die in der Vorformlingsherstellungseinrichtung hergestellten Vorformlinge nach deren Herstellung von der Vorformlingsherstellungseinrichtung in die Temperiereinrichtung gefördert werden. Das Transferelement kann beispielsweise ein Transferstern oder eine Linearfördereinrichtung sein.

Die Blasmaschine kann insbesondere eine Streckblasmaschine sein. Zwischen der Temperiereinrichtung und der Blasmaschine kann ein weiteres Transferelement angeordnet sein, wobei die in der Temperiereinrichtung erwärmten Vorformlinge über das weitere Transferelement in die Blasmaschine gefördert werden können.

Die Temperiereinrichtung kann derart ausgebildet und/oder konfiguriert sein, dass die Temperierung von Vorformlingen, die in einem Takt der Vorformlingsherstellungseinrichtung hergestellt wurden, basierend auf der Temperatur der Vorformlinge, die sie beim Einbringen in die Temperiereinrichtung aufweisen, erfolgt.

Die Temperiereinrichtung kann in Form einer Mikrowellen- und/oder Laserheizung ausgebildet sein. Dadurch kann das Temperieren individuell und reaktionsschnell durchgeführt werden. Die Temperiereinrichtung, insbesondere in Form einer Mikrowellen- und/oder Laserheizung, kann insbesondere eine Reaktionszeit von weniger als 1 Sekunde aufweisen.

Die Temperiereinrichtung kann insbesondere ein oder mehrere Mikrowellenheizelemente umfassen. Dadurch ist eine sehr energieeffiziente Erwärmung der Vorformlinge möglich.

Die Temperiereinrichtung kann derart ausgebildet und/oder konfiguriert sein, dass ein erster Vorformling, der in einem Takt der Vorformlingsherstellungseinrichtung hergestellt wurde und zuerst in die Temperiereinrichtung eingebracht wird, weniger stark erwärmt wird als ein zweiter Vorformling, der im selben Takt der Vorformlingsherstellungseinrichtung hergestellt wurde und nach dem ersten Vorformling in die Temperiereinrichtung eingebracht wird. Dadurch kann eine stärkere Abkühlung von Vorformlingen, die später in die Temperiereinrichtung eingebracht werden, kompensiert werden und somit können alle Vorformlinge, die in einem Takt der Vorformlingsherstellungseinrichtung hergestellt wurden, im Wesentlichen auf dieselbe Temperatur gebracht werden.

Die Temperiereinrichtung kann derart ausgebildet und/oder konfiguriert sein, dass die Temperierung von Vorformlingen, die in einem Takt der Vorformlingsherstellungseinrichtung hergestellt wurden, basierend auf der Reihenfolge, in der sie in die Temperiereinrichtung eingebracht werden, erfolgt.

Die Vorrichtung zum Herstellen von Kunststoffbehältern kann außerdem wenigstens ein Messelement zum Bestimmen der Temperatur eines Vorformlings umfassen, wobei die Temperiereinrichtung derart ausgebildet und/oder konfiguriert ist, dass die Temperierung des Vorformlings in der Temperiereinrichtung in Abhängigkeit von der bestimmten Temperatur durchgeführt wird. Dadurch kann die Temperierung der Vorformlinge auf die Temperaturen der Vorformlinge beim Einbringen in die Temperiereinrichtung abgestimmt werden.

Das wenigstens eine Messelement kann insbesondere die Temperatur an einer oder mehreren Stellen der Oberfläche des Vorformlings bestimmen. Das wenigstens eine Messelement kann insbesondere eine mittlere Temperatur des Vorformlings bestimmen. Vorzugsweise findet die Temperaturmessung berührungslos statt.

Das wenigstens eine Messelement kann beispielsweise einem Strahlungsthermometer wie einem Pyrometer oder einer Infrarotkamera entsprechen.

Das wenigstens eine Messelement kann vor und/oder innerhalb der Temperiereinrichtung angeordnet sein. Beispielsweise kann das wenigstens eine Messelement derart angeordnet und/oder ausgebildet sein, dass es die Temperatur eines Vorformlings während des Temperierens in der Temperiereinrichtung bestimmen kann. Wenn der Vorformling eine vorherbestimmte oder gewünschte Temperierung erreicht hat kann in diesem Fall die Temperierung des Vorformlings, beispielsweise durch ein Signal des wenigstens einen Messelements, gestoppt werden. Dabei kann das Temperieren bevorzugt mit einer Mikrowellen- und/oder Laserheizung durchgeführt werden.

Alternativ oder zusätzlich kann das wenigstens eine Messelement vor der Temperiereinrichtung angeordnet sein und die Temperierung der Vorformlinge basierend auf der bestimmten Temperatur, die sie beim Einbringen in die Temperiereinrichtung aufweisen, erfolgen.

Die Vorrichtung kann außerdem einen Pufferspeicher für Vorformlinge umfassen, insbesondere wobei der Pufferspeicher zwischen der Vorformlingsherstellungseinrichtung und der Temperiereinrichtung angeordnet ist. Dadurch können bei einer Fehlfunktion der Blasmaschine die in der Herstellungseinrichtung hergestellten Vorformlinge im Pufferspeicher zwischengespeichert werden.

Der Pufferspeicher kann insbesondere derart ausgebildet und/oder angeordnet sein, dass ein Vorformling aus der Vorformlingsherstellungseinrichtung direkt in den Pufferspeicher und/oder vom Pufferspeicher direkt in die Blasmaschine gefördert werden kann. Mit anderen Worten kann der Pufferspeicher über wenigstens ein Transportelement mit der Vorformlingsherstellungseinrichtung und/oder der Blasmaschine verbunden sein.

Der Pufferspeicher kann insbesondere einem wärmeisolierten Puffer entsprechen, also wärmeisolierend ausgebildet sein. Dadurch kann eine vom Herstellungsprozess vorhandene Restwärme der Vorformlinge im Pufferspeicher länger erhalten bleiben.

Alternativ oder zusätzlich kann der Pufferspeicher einen Speicherbehälter umfassen oder einem solchen entsprechen, insbesondere wobei der Speicherbehälter von der Blasmaschine getrennt angeordnet ist, insbesondere also nicht mit der Blasmaschine über ein Transportelement verbunden ist.

In diesem Fall kann die Vorformlingsherstellungseinrichtung derart konfiguriert sein, dass, wenn in der Vorformlingsherstellungseinrichtung hergestellte Vorformlinge in den Speicherbehälter geleitet werden sollen, die Zykluszeit der Vorformlingsherstellungseinrichtung verlängert wird. Dadurch können die Vorformlinge vor dem Einbringen in den Speicherbehälter formstabiler werden und damit als Schüttgut weniger leicht verkleben.

Die Vorrichtung zum Herstellen von Kunststoffbehältern kann außerdem ein Regelungselement umfassen, das derart konfiguriert ist, dass es den Betrieb der Vorformlingsherstellungseinrichtung und/oder der Blasmaschine in Abhängigkeit von einem Betriebszustand der Blasmaschine regelt. Dadurch kann beispielsweise bei einer Fehlfunktion der Blasmaschine der Betrieb der Vorformlingsherstellungseinrichtung und/oder der Blasmaschine entsprechend angepasst werden.

Beispielsweise kann das Regelungselement derart konfiguriert sein, dass bei einer Störung der Blasmaschine wenigstens ein Betriebsparameter der Vorformlingsherstellungseinrichtung angepasst wird. Der wenigstens eine Betriebsparameter der Vorformlingsherstellungseinrichtung kann beispielsweise der Extruderdrehzahl und/oder der Zykluszeit der Vorformlingsherstellungseinrichtung entsprechen. Bei einer Störung der Blasmaschine kann beispielsweise die Extruderdrehzahl gesenkt werden und/oder die Zykluszeit der getakteten Vorformlingsherstellungseinrichtung verlängert werden.

Das Regelungselement kann insbesondere derart konfiguriert sein, dass es zwischen zwei vorherbestimmten Betriebseinstellungen oder Rezepten für die Vorformlingsherstellungseinrichtung und/oder die Blasmaschine, insbesondere in Abhängigkeit von einem Betriebszustand der Blasmaschine, wechseln kann.

Das Regelungselement kann auch derart konfiguriert sein, dass es eine Betriebseinstellung oder ein Rezept für die Vorformlingsherstellungseinrichtung und/oder die Blasmaschine, insbesondere in Abhängigkeit von einem Betriebszustand der Blasmaschine, bestimmen kann. Dadurch kann beispielsweise die Anpassung eines Betriebsparameters der Vorformlingsherstellungseinrichtung geeignet gewählt werden.

Die Blasmaschine und/oder das Regelungselement können derart konfiguriert sein, dass nach dem Beheben einer Störung der Blasmaschine die Blasmaschine mit reduzierter Leistung betrieben wird, insbesondere bis alle im Pufferspeicher gepufferten Vorformlinge verarbeitet wurden. Dadurch können die hergestellten Vorformlinge, auch wenn sie auf Raumtemperatur abgekühlt sind, noch in der Blasmaschine verarbeitet werden, auch wenn die Temperiereinrichtung nicht zum Erwärmen von auf Raumtemperatur abgekühlten Vorformlingen ausgelegt oder dimensioniert ist.

Das Regelungselement kann auch derart konfiguriert sein, dass nach dem Beheben einer Störung der Blasmaschine und nachdem alle im Pufferspeicher gepufferten Vorformlinge verarbeitet wurden, der wenigstens eine angepasste Betriebsparameter der Vorformlingsherstellungseinrichtung aktualisiert wird. Beispielsweise kann die Extruderdrehzahl wieder erhöht werden und/oder die Zykluszeit der getakteten Vorformlingsherstellungseinrichtung wieder verkürzt werden.

Die Temperiereinrichtung kann in der Blasmaschine integriert ausgebildet sein. Beispielsweise können Heizelemente und/oder Kühlluftelemente der Temperiereinrichtung auf einem Blasrad der Blasmaschine angeordnet sein. Dadurch kann die Vorrichtung zum Herstellen von Kunststoffbehältern kompakt und platzsparend ausgebildet werden.

Die Erfindung stellt außerdem ein Verfahren zum Herstellen von Kunststoffbehältern in einer Vorrichtung zum Herstellen von Kunststoffbehältern, umfassend eine getaktete Vorformlingsherstellungseinrichtung, eine Temperiereinrichtung zum thermischen Konditionieren von in der Vorformlingsherstellungseinrichtung hergestellten Vorformlingen und eine Blasmaschine, bereit, umfassend die Schritte Herstellen einer vorherbestimmten Anzahl von Vorformlingen in einer getakteten Vorformlingsherstellungseinrichtung und Einbringen der vorherbestimmten Anzahl von Vorformlingen in eine Temperiereinrichtung zum thermischen Konditionieren der Vorformlinge, wobei die Vorformlinge in der Temperiereinrichtung unterschiedlich temperiert werden und Streckblasen der Vorformlinge in der Blasmaschine, um Kunststoffbehälter zu erhalten.

Dadurch, dass die Vorformlinge in der Temperiereinrichtung unterschiedlich temperiert werden, kann unterschiedlichen Temperaturen der Vorformlinge beim Einbringen in die Temperiereinrichtung Rechnung getragen werden.

Das Verfahren kann insbesondere mit einer oben beschriebenen Vorrichtung durchgeführt werden. In diesem Fall kann das Verfahren ein Bereitstellen einer oben beschriebenen Vorrichtung umfassen.

Die vorherbestimmte Anzahl von Vorformlingen kann insbesondere in einem Takt der Vorformlingsherstellungseinrichtung hergestellt werden.

Ein erster Vorformling, der in einem Takt der Vorformlingsherstellungseinrichtung hergestellt wurde und zuerst in die Temperiereinrichtung eingebracht wird, kann weniger stark erwärmt werden als ein zweiter Vorformling, der im selben Takt der Vorformlingsherstellungseinrichtung hergestellt wurde und nach dem ersten Vorformling in die Temperiereinrichtung eingebracht wird.

Mit anderen Worten kann die Temperierung der vorherbestimmten Anzahl von Vorformlinge basierend auf der Reihenfolge, in der sie in die Temperiereinrichtung eingebracht werden, erfolgen.

Vor und/oder während des Temperierens eines Vorformlings in der Temperiereinrichtung kann eine Temperatur des Vorformlings bestimmt werden, wobei das Temperieren des Vorformlings basierend auf der bestimmten Temperatur durchgeführt wird.

Mit anderen Worten kann die Temperierung der vorherbestimmten Anzahl von Vorformlinge basierend auf der Temperatur, die sie beim Einbringen in die Temperiereinrichtung aufweisen, erfolgen.

Die Temperierung der vorherbestimmten Anzahl von Vorformlinge kann auch basierend auf der Temperatur, die sie während des Temperierens in der Temperiereinrichtung aufweisen, erfolgen. Beispielsweise kann die Temperierung eines Vorformlings gestoppt werden, sobald dieser eine vorherbestimmte oder gewünschte Temperierung aufweist.

Die Temperierung eines Vorformlings kann, insbesondere mit einem oben beschriebenen, Messelement bestimmt werden.

Im Falle einer Störung der Blasmaschine können die von der getakteten Vorformlingsherstellungseinrichtung hergestellten Vorformlinge in einen Pufferspeicher eingebracht werden. Der Pufferspeicher kann insbesondere einem wärmeisolierten Puffer entsprechen.

Im Falle einer Störung der Blasmaschine kann wenigstens ein Betriebsparameter der getakteten Vorformlingsherstellungseinrichtung verändert werden. Insbesondere kann im Falle einer Störung der Blasmaschine der Betrieb der Vorformlingsherstellungseinrichtung von einer ersten vorherbestimmten Betriebseinstellung zu einer zweiten vorherbestimmten Betriebseinstellung gewechselt werden.

Nach dem Beheben einer Störung der Blasmaschine kann die Blasmaschine mit reduzierter Leistung betrieben werden, insbesondere bis alle im Pufferspeicher gepufferten Vorformlinge verarbeitet wurden. Dadurch können die hergestellten Vorformlinge, auch wenn sie auf Raumtemperatur abgekühlt sind, noch in der Blasmaschine verarbeitet werden, auch wenn die Temperiereinrichtung nicht zum Erwärmen von auf Raumtemperatur abgekühlten Vorformlingen ausgelegt ist.

Weitere Vorteile und Merkmale der Erfindung werden nachfolgend anhand der beispielhaften Figuren erläutert. Dabei zeigt
- Figur 1: eine beispielhafte Vorrichtung zum Herstellen von Kunststoffbehältern;
- Figur 2: eine weitere beispielhafte Vorrichtung zum Herstellen von Kunststoffbehältern;
- Figur 3: eine beispielhafte Temperiereinrichtung zum thermischen Konditionieren von Vorformlingen;
- Figur 4: eine Illustration eines beispielhaften Verfahrens zum Herstellen von Kunststoffbehältern in Form eines Flussdiagramms; und
- Figur 5: eine Illustration eines weiteren beispielhaften Verfahrens zum Herstellen von Kunststoffbehältern in Form eines Flussdiagramms.

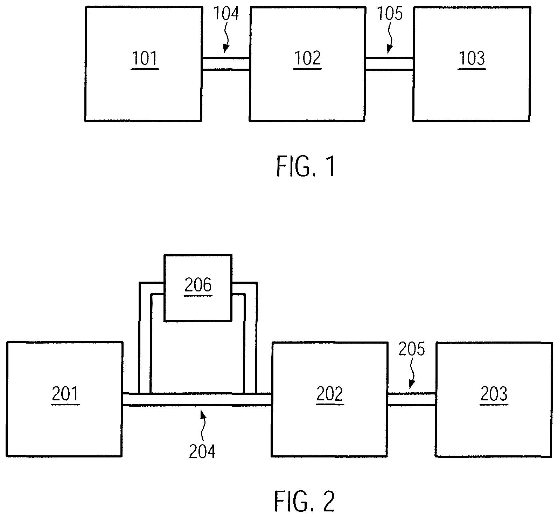

Figur 1 zeigt eine beispielhafte Vorrichtung zum Herstellen von Kunststoffbehältern umfassend eine getaktete Vorformlingsherstellungseinrichtung 101, eine Temperiereinrichtung 102 zum thermischen Konditionieren von in der Vorformlingsherstellungseinrichtung 101 hergestellten Vorformlingen und eine Blasmaschine 103.

Bei der in Figur 1 gezeigten Vorrichtung handelt es sich also um eine Blockmaschine. Durch die Verblockung der Vorformlingsherstellungseinrichtung 101 mit der Temperiereinrichtung 102 und der Blasmaschine 103 kann Energie eingespart werden, da die Restwärme der Vorformlinge aus dem Herstellungsprozess, beispielsweise dem Spritzgießprozess, genutzt werden kann. Auch kann die Verschmutzungswahrscheinlichkeit der Vorformlinge durch die Verblockung verringert werden.

Die getaktete Vorformlingsherstellungseinrichtung 101 kann insbesondere eine getaktete Spritzgießeinrichtung sein. In der getakteten Vorformlingsherstellungseinrichtung 101 können Vorformlinge im Batchbetrieb hergestellt werden. Mit anderen Worten kann eine Vielzahl von Vorformlingen, üblicherweise 16 - 96, vorzugsweise 72, gleichzeitig in einem Takt hergestellt werden.

Nach dem Spritzgießen der Vorformlinge in der Vorformlingsherstellungseinrichtung 101 werden die in einer Matrix spritzgegossenen Vorformlinge zunächst vereinzelt und dann über ein erstes Förderelement 104 in die Temperiereinrichtung 102 gefördert. Die Vorformlinge können insbesondere unmittelbar nach dem Spritzgießen in die Temperiereinrichtung 102 eingebracht werden. Dadurch sind die Vorformlinge noch durch den Spritzgießprozess erwärmt, wodurch Energie zur Temperierung der Vorformlinge eingespart werden kann.

Bei der Temperiereinrichtung 102 kann es sich beispielsweise um eine Mikrowellentemperiereinrichtung handeln. Da sich die Effizienz der Mikrowellenheizung deutlich erhöht, wenn die Vorformlinge bereits erwärmt sind, kann auf diese Weise der Energiespareffekt der Verblockung der Spritzgießvorrichtung mit der Temperiereinrichtung und der Blasmaschine überproportional erhöht werden.

Insbesondere kann die Temperiereinrichtung in diesem Fall kleiner dimensioniert werden als wenn die Vorformlinge von Zimmertemperatur erwärmt werden müssen. Beispielsweise kann das Verhältnis von Heizelementen der Heizvorrichtung zu Blasstationen der Blasmaschine gesenkt werden. Beispielsweise kann das Verhältnis von Heizelementen der Heizvorrichtung zu Blasstationen der Blasmaschine 2:1 oder 1:1 betragen.

Die Heizelemente können, insbesondere wenn das Verhältnis von Heizelementen zu Blasstationen der Blasmaschine 1:1 beträgt, auf einem Blasrad der Blasmaschine angeordnet werden. Damit können Kosten, insbesondere Materialkosten, eingespart werden.

Die Temperiereinrichtung 102 kann insbesondere mehrere Heizelemente umfassen, die einzeln gesteuert oder geregelt werden können. Insbesondere kann die Temperiereinrichtung 102 derart ausgebildet und/oder konfiguriert sein, dass unterschiedliche Vorformlinge verschieden temperiert, insbesondere erwärmt, werden können.

Nachdem die Vorformlinge in der Temperiereinrichtung 102 auf eine vorherbestimmte Temperatur temperiert wurden, werden diese durch ein zweites Förderelement 105 an die Blasmaschine 103 übergeben. Die Blasmaschine 103 kann insbesondere eine Streckblasmaschine sein, in welcher die erwärmten Vorformlinge zu den Kunststoffbehältern geblasen, insbesondere streckgeblasen, werden.

Damit die Qualität der streckgeblasenen Kunststoffbehälter gleichbleibend ist, sollten die Temperaturen der erwärmten Vorformlinge um nicht mehr als +/- 1 °C variieren.

Die Vorformlinge können insbesondere einen thermoplastischen Kunststoff, beispielsweise PET (Polyethylenterephthalat), umfassen oder aus einem solchem bestehen. In der Blasmaschine 103 werden die erwärmten Vorformlinge in je eine Blasform eingebracht, wobei die Blasform einen inneren Hohlraum aufweist, dessen Wandfläche der Kontur des auszubildenden Kunststoffbehälters entspricht. Nach dem Schließen der Blasform wird der Vorformling mit Druckluft beaufschlagt, so dass sich der Rohling aufweitet und von innen gegen die Wandung der Blasform gedrückt wird. Zusätzlich zur Blasformung kann eine Reckstange in den Rohling eingeführt werden, um diesen in Längsrichtung zu verstrecken.

Figur 2 zeigt ein weiteres Beispiel einer Vorrichtung zum Herstellen von Kunststoffbehältern. Die Vorrichtung umfasst eine Vorformlingsherstellungseinrichtung 201, eine Temperiereinrichtung 202 und eine Blasmaschine 203, wobei die Vorformlingsherstellungseinrichtung 201 mit der Temperiereinrichtung 202 über ein erstes Förderelement 204 und die Temperiereinrichtung 202 mit der Blasmaschine über ein zweites Förderelement 205 verbunden sind.

Die Vorrichtung in Figur 2 unterscheidet sich von der Vorrichtung in Figur 1 dadurch, dass zusätzlich ein Pufferspeicher 206 für in der Vorformlingsherstellungseinrichtung 201 hergestellte Vorformlinge vorgesehen ist. In diesen Pufferspeicher 206 können beispielsweise bei einer Fehlfunktion der Temperiereinrichtung 202 und/oder der Blasmaschine 203 in der Vorformlingsherstellungseinrichtung 201 hergestellte Vorformlinge eingebracht werden. Der Pufferspeicher 206 kann also als Zwischenspeicher für Vorformlinge dienen. Der Pufferspeicher 206 kann insbesondere wärmeisoliert ausgebildet sein. Dadurch kann die Wärme der Vorformlinge aus dem Herstellungsprozess länger erhalten werden.

Der Pufferspeicher 206 und/oder das erste und zweite Förderelement 204, 205 können gekapselt werden. Dadurch kann eine Verschmutzung der Vorformlinge, insbesondere durch Keime, verhindert oder wenigstens verringert werden. Gekapselt kann in diesem Zusammenhang bedeuten, dass ein Gehäuse für den Pufferspeicher 206 und/oder das erste und zweite Förderelement 204, 205 vorgesehen wird, dessen Inneres gegenüber der Umgebung steril gehalten werden kann. Sterilität kann hier durch geeignete hygienische Maßnahmen hergestellt werden, beispielsweise durch Spülen mit H₂O₂.

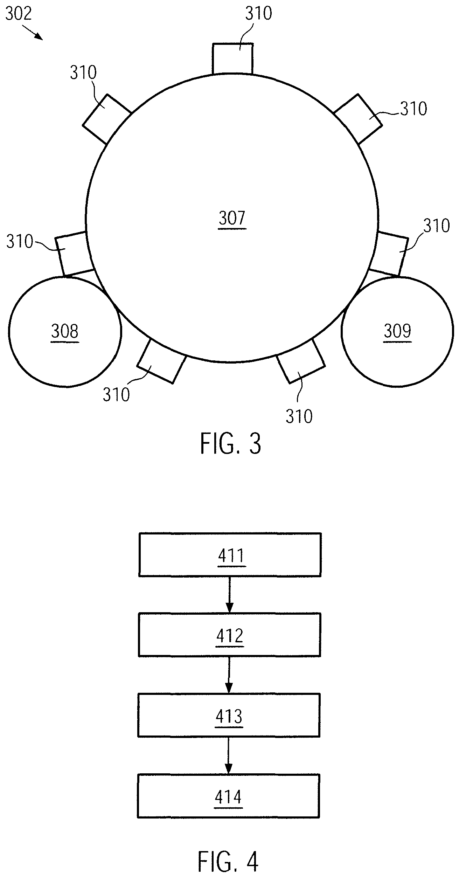

Figur 3 zeigt eine beispielhafte Temperiereinrichtung 302, die als Rundläufer ausgebildet ist. Dabei umfasst die beispielhafte Temperiereinrichtung 302 ein Heizrad 307, ein Einschleuseelement 308 und ein Ausschleuseelement 309. Am Heizrad 307 sind mehrere Heizelemente 310 angeordnet. Bei den Heizelementen 310 kann es sich um Kavitäten oder Heiztaschen handeln, in denen Vorformlinge erwärmt werden können. Insbesondere können die Heizelemente 310 derart ausgebildet sein, dass Vorformlinge in unterschiedlichen Heizelementen 310 verschieden erwärmt werden können.

Alternativ oder zusätzlich kann die Temperiereinrichtung 302 Kühlelemente umfassen, insbesondere wobei Vorformlinge mit den Kühlelementen verschieden gekühlt werden können.

Bei den Heizelementen 310 kann es sich beispielsweise um Mikrowellenheizelemente oder Infrarotheizelemente, insbesondere STIR Heizelemente, handeln. STIR (Selektiv-Transformiertes Infrarot) bedeutet, dass die Erwärmung der Vorformlinge durch selektive, transformierte Infrarotstrahlung durchgeführt wird. Beispielsweise können die Vorformlinge in Heiztaschen eingebracht werden, die die Vorformlinge bis auf den Mündungsabschnitt im Wesentlichen vollumfänglich umgeben. In den Vorformling kann dabei ein Heizdorn eingebracht werden, der zumindest teilweise aus einer Funktionskeramik besteht, die die von außen eingebrachte Infrarotstrahlung, die durch den Vorformling transmittiert wird, in Strahlung mit einer anderen Wellenlänge umwandelt und auf den Vorformling zurückemittiert.

Im Beispiel der Figur 3 sind die Heizelemente 310 auf einem separaten Heizrad 307 angeordnet. Die Heizelemente können jedoch auch auf einem Blasrad der Blasmaschine angeordnet werden, insbesondere wenn das Verhältnis von Heizelementen zu Blasstationen der Blasmaschine 1:1 beträgt. Damit können Kosten, insbesondere Materialkosten, eingespart werden.

Figur 4 illustriert ein beispielhaftes Verfahren zum Herstellen von Kunststoffbehältern, beispielsweise mit einer der in den Figuren 1 - 3 gezeigten beispielhaften Vorrichtungen.

In einem ersten Schritt 411 wird eine vorherbestimmte Anzahl von Vorformlingen in einem Takt einer getakteten Vorformlingsherstellungseinrichtung hergestellt. Beispielsweise können zwei oder mehr Vorformlinge gleichzeitig in der getakteten Vorformlingsherstellungseinrichtung spritzgegossen werden.

Die vorherbestimmte Anzahl von Vorformlingen kann dann in einem Schritt 412 in eine Temperiereinrichtung eingebracht werden. Insbesondere können die Vorformlinge hintereinander in die Temperiereinrichtung eingebracht werden. Dafür können die in einem Takt der getakteten Vorformlingsherstellungseinrichtung hergestellten Vorformlinge zuvor vereinzelt werden.

Vor, nach und/oder während des Einbringens der Vorformlinge in die Temperiereinrichtung kann für jeden der Vorformlinge eine Temperatur, beispielsweise eine mittlere Temperatur, bestimmt werden.

In Schritt 413 werden die Vorformlinge dann basierend auf der jeweiligen für sie bestimmten Temperatur temperiert, insbesondere erwärmt. Da die Vorformlinge üblicherweise unterschiedliche Temperaturen aufweisen werden, beispielsweise aufgrund unterschiedlicher Abkühlzeiten beim Transport von der getakteten Vorformlingsherstellungseinrichtung zur Temperiereinrichtung, können die Vorformlinge insbesondere unterschiedlich temperiert werden. Beispielsweise kann die Erwärmungsdauer für einen Vorformling basierend auf der bestimmten Temperatur für den Vorformling bestimmt werden.

Die temperierten Vorformlinge werden dann in eine Blasmaschine eingebracht und dort in Schritt 414 zu Kunststoffbehältern geblasen, insbesondere streckgeblasen.

Alternativ oder zusätzlich zu einer Temperierung der Vorformlinge basierend auf einer gemessenen Temperatur der Vorformlinge vor dem Erwärmen kann die Temperierung der Vorformlinge auch basierend auf der Reihenfolge, in der sie in die Temperiereinrichtung eingebracht werden, erfolgen. Insbesondere können die Vorformlinge eines Taktes der Vorformlingsherstellungseinrichtung, die zuerst in die Temperiereinrichtung eingebracht werden weniger stark erwärmt werden als später eingebrachte Vorformlinge desselben Taktes.

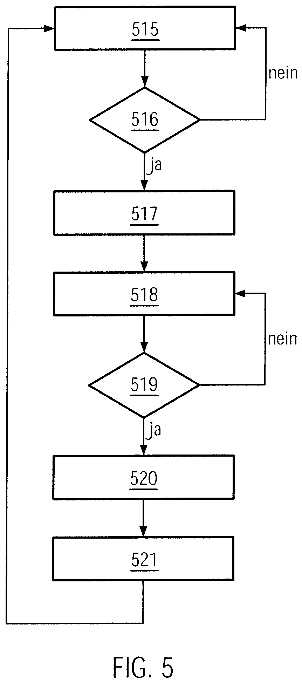

In Figur 5 ist ein weiteres beispielhaftes Verfahren zum Herstellen von Kunststoffbehältern illustriert, wobei eine Steuerung vorgesehen ist, welche den Betrieb einer Vorformlingsherstellungseinrichtung und/oder einer Blasmaschine in Abhängigkeit von einem Betriebszustand der Blasmaschine regelt.

Dazu wird während des Herstellens von Kunststoffbehältern, beispielsweise gemäß einem Verfahren wie in Figur 4 illustriert, zunächst in Schritt 515 der Betriebszustand der Blasmaschine bestimmt. Schritt 515 kann beispielsweise ein Erfassen einer Eingabe durch eine Bedienperson und/oder ein Erfassen wenigstens eines Messwerts wenigstens einer Messvorrichtung umfassen.

In Schritt 516 kann bestimmt werden, ob der Betriebszustand der Blasmaschine eine Anpassung des Betriebs der Blasmaschine und/oder einer Vorformlingsherstellungseinrichtung erfordert. Wenn dies nicht der Fall ist, kehrt das Verfahren zu Schritt 515 zurück.

Wenn dies der Fall ist, beispielsweise im Fall einer Störung der Blasmaschine, wird in Schritt 517 wenigstens ein Betriebsparameter der Vorformlingsherstellungseinrichtung und/oder der Blasmaschine angepasst. Beispielsweise kann die Blasmaschine entkoppelt und gestoppt oder wenigstens verlangsamt werden.

Die Leistung der Vorformlingsherstellungseinrichtung kann in diesem Fall reduziert werden, beispielsweise auf ein Viertel der vollen Leistung. Insbesondere kann die Vorformlingsherstellungseinrichtung mit einer kleineren Extruderdrehzahl und/oder mit längeren Zykluszeiten betrieben werden. Durch die geringere Extruderdrehzahl kann die Schmelzezufuhr zur Vorformlingsherstellungseinrichtung reduziert werden. Die von der Vorformlingsherstellungseinrichtung hergestellten Vorformlinge können in einen wärmeisolierten Pufferspeicher eingebracht werden.

In Schritt 518 kann ein Betriebszustand der Blasmaschine bestimmt werden, insbesondere analog zu Schritt 515. In Schritt 519 kann bestimmt werden, ob der Betriebszustand der Blasmaschine eine Anpassung des Betriebs der Blasmaschine und/oder der Vorformlingsherstellungseinrichtung erfordert, insbesondere ob die Störung der Blasmaschine behoben ist. Wenn nein, kann das Verfahren zu Schritt 518 zurückkehren und den Betriebszustand der Blasmaschine weiter beobachten.

Ansonsten kann in Schritt 520 der Betrieb der Blasmaschine fortgeführt werden. Vorformlinge aus dem wärmeisolierten Pufferspeicher können dann in der Temperiereinrichtung temperiert, insbesondere erwärmt, werden. Sobald der Pufferspeicher leer gefahren wurde, kann in Schritt 521 die Leistung der Vorformlingsherstellungseinrichtung wieder erhöht werden. Insbesondere kann die Extruderdrehzahl der Vorformlingsherstellungseinrichtung wieder erhöht werden und/oder die Zykluszeiten der Vorformlingsherstellungseinrichtung wieder verkürzt werden.

Wenn die Vorformlinge in dem Pufferspeicher unter eine vorherbestimmte Temperatur abgekühlt sind, beispielsweise bis auf Raumtemperatur, kann die Erwärmung der Vorformling soviel Heizzeit erfordern, dass die Blasmaschine nicht mit voller Leistung betrieben werden kann. In diesem Fall kann in Schritt 520 der Betrieb der Blasmaschine mit verminderter Leistung fortgeführt werden. Sobald der Pufferspeicher leer gefahren wurde, kann in Schritt 521 die Ausstoßleistung der Blasmaschine wieder erhöht und die Blasmaschine und die Vorformlingsherstellungseinrichtung wieder bei voller Leistung betrieben werden. Danach kann das Verfahren zu Schritt 515 zurückkehren.

## Patentansprüche

1. Vorrichtung zum Herstellen von Kunststoffbehältern, umfassend eine getaktete Vorformlingsherstellungseinrichtung (101; 201), eine Temperiereinrichtung (102; 202; 302) zum thermischen Konditionieren von in der Vorformlingsherstellungseinrichtung (101; 201) hergestellten Vorformlingen und eine kontinuierlich arbeitende Blasmaschine (103; 203; 303),
wobei die Temperiereinrichtung (102; 202; 302) derart ausgebildet und/oder konfiguriert ist, dass Vorformlinge, die in einem Takt der Vorformlingsherstellungseinrichtung (101; 201) hergestellt wurden, verschieden temperiert werden können
**dadurch gekennzeichnet, dass**
die Vorrichtung außerdem ein Messelement zum Bestimmen der Temperatur eines Vorformlings umfasst, wobei die Temperiereinrichtung (102; 202; 302) derart ausgebildet und/oder konfiguriert ist, dass das Temperieren des Vorformlings in der Temperiereinrichtung (102; 202; 302) in Abhängigkeit von der bestimmten Temperatur durchgeführt wird.

2. Vorrichtung nach Anspruch 1, wobei die Temperiereinrichtung (102; 202; 302) derart ausgebildet und/oder konfiguriert ist, dass die Temperierung von Vorformlingen, die in einem Takt der Vorformlingsherstellungseinrichtung (101; 201) hergestellt wurden, basierend auf der Temperatur der Vorformlinge, die sie beim Einbringen in die Temperiereinrichtung (102; 202; 302) aufweisen, erfolgt.

3. Vorrichtung nach einem der vorangegangenen Ansprüche, wobei die Temperiereinrichtung (102; 202; 302) in Form einer Mikrowellen- und/oder Laserheizung ausgebildet ist.

4. Vorrichtung nach einem der vorangegangenen Ansprüche, außerdem umfassend einen Pufferspeicher (206) für Vorformlinge, wobei der Pufferspeicher (206) zwischen der Vorformlingsherstellungseinrichtung (101; 201) und der Temperiereinrichtung (102; 202; 302) angeordnet ist.

5. Vorrichtung nach Anspruch 4, wobei der Pufferspeicher (206) wärmeisolierend ausgebildet ist.

6. Vorrichtung nach einem der vorangegangenen Ansprüche, außerdem umfassend ein Regelungselement, das derart konfiguriert ist, dass es den Betrieb der Vorformlingsherstellungseinrichtung (101; 201) und/oder der Blasmaschine (103; 203; 303) in Abhängigkeit von einem Betriebszustand der Blasmaschine (103; 203; 303) regelt.

7. Verfahren zum Herstellen von Kunststoffbehältern in einer Vorrichtung zum Herstellen von Kunststoffbehältern, umfassend eine getaktete Vorformlingsherstellungseinrichtung (101; 201), eine Temperiereinrichtung (102; 202; 302) zum thermischen Konditionieren von in der Vorformlingsherstellungseinrichtung (101; 201) hergestellten Vorformlingen und eine Blasmaschine (103; 203; 303), umfassend die Schritte:
Herstellen einer vorherbestimmten Anzahl von Vorformlingen in der getakteten Vorformlingsherstellungseinrichtung (101; 201); und
Einbringen der vorherbestimmten Anzahl von Vorformlingen in die Temperiereinrichtung (102; 202; 302) zum thermischen Konditionieren der Vorformlinge, wobei die Vorformlinge in der Temperiereinrichtung (102; 202; 302) unterschiedlich temperiert werden; und
Streckblasen der Vorformlinge in der Blasmaschine (103; 203; 303), um Kunststoffbehälter zu erhalten;
**dadurch gekennzeichnet, dass**
vor und/oder während des Erwärmens eines Vorformlings in der Temperiereinrichtung (102; 202; 302) eine Temperatur des Vorformlings bestimmt wird und das Temperieren des Vorformlings basierend auf der bestimmten Temperatur durchgeführt wird.

8. Verfahren nach Anspruch 7 , wobei im Falle einer Störung der Blasmaschine (103; 203; 303) die von der getakteten Vorformlingsherstellungseinrichtung (101; 201) hergestellten Vorformlinge in einen Pufferspeicher (206) eingebracht werden.

9. Verfahren nach einem der Ansprüche 7 - 8, wobei im Falle einer Störung der Blasmaschine (103; 203; 303) wenigstens ein Betriebsparameter der getakteten Vorformlingsherstellungseinrichtung (101; 201) verändert wird.

10. Verfahren nach Anspruch 8 oder 9, wobei nach dem Beheben einer Störung der Blasmaschine (103; 203; 303) die Blasmaschine (103; 203; 303) mit reduzierter Leistung betrieben wird bis alle im Pufferspeicher (206) gepufferten Vorformlinge verarbeitet wurden.

## Claims

1. Device for manufacturing plastic containers, comprising a clocked preform manufacturing means (101; 201), a temperature control means (102; 202; 302) for thermal conditioning of preforms manufactured in the preform manufacturing means (101; 201), and a continuously working blow molding machine (103; 203; 303),
wherein the temperature control means (102; 202; 302) is designed and/or configured such that preforms that have been manufactured in one cycle of the preform manufacturing means (101; 201) can be differently temperature controlled
**characterized in that**
the device further comprises a measuring element for determining the temperature of a preform, wherein the temperature control means (102; 202; 302) is designed and/or configured such that the temperature control of the preform in the temperature control means (102; 202; 302) is carried out depending on the determined temperature.

2. Device according to claim 1, wherein the temperature control means (102; 202; 302) is designed and/or configured such that the temperature control of preforms that have been manufactured in one cycle of the preform manufacturing means (101; 201) is effected based on the temperature of the preforms they exhibit while they are introduced into the temperature control means (102; 202; 302).

3. Device according to one of the preceding claims, wherein the temperature control means (102; 202; 302) is embodied in the form of a microwave and/or laser heating.

4. Device according to one of the preceding claims, moreover comprising a buffer storage (206) for preforms, wherein the buffer storage (206) is arranged between the preform manufacturing means (101; 201) and the temperature control means (102; 202; 302).

5. Device according to claim 4, wherein the buffer storage (206) is embodied to be heat-insulated.

6. Device according to one of the preceding claims, moreover comprising a control element, which is configured such that it controls the operation of the preform manufacturing means (101; 201) and/or the blow molding machine (103; 203; 303) depending on an operating state of the blow molding machine (103; 203; 303).

7. Method of manufacturing plastic containers in a device for manufacturing plastic containers, comprising a clocked preform manufacturing means (101; 201), a temperature control means (102; 202; 302) for thermal conditioning preforms manufactured in the preform manufacturing means (101; 201), and a blow molding machine (103; 203; 303), comprising the steps of:
manufacturing a predetermined number of preforms in the clocked preform manufacturing means (101; 201); and
introducing the predetermined number of preforms into the temperature control means (102; 202; 302) for thermal conditioning the preforms, wherein the preforms are differently temperature controlled in the temperature control means (102; 202; 302); and
stretch blow molding of the preforms in the blow molding machine (103; 203; 303) to obtain plastic containers;
**characterized in that**
before and/or during the heating of a preform in the temperature control means (102; 202; 302), a temperature of the preform is determined and the temperature control of the preform is carried out based on the determined temperature.

8. Method according to claim 7, wherein in case of a malfunction of the blow molding machine (103; 203; 303), the preforms manufactured by the clocked preform manufacturing means (101; 201) are introduced into a buffer storage (206).

9. Method according to one of claims 7 - 8, wherein in case of a malfunction of the blow molding machine (103; 203; 303), at least one operating parameter of the clocked preform manufacturing means (101; 201) is changed.

10. Method according to claim 8 or 9, wherein after a malfunction of the blow molding machine (103; 203; 303) has been removed, the blow molding machine (103; 203; 303) is operated at reduced power until all preforms stored in the buffer storage (206) have been processed.

## Revendications

1. Installation destinée à la fabrication de contenants en matière plastique, comprenant un dispositif de fabrication de préformes (101; 201) à fonctionnement par cycles, un dispositif de mise en température (102; 202; 302) pour le conditionnement thermique de préformes fabriquées dans le dispositif de fabrication de préformes (101; 201), et une machine de soufflage (103; 203; 303) travaillant de manière continue,
le dispositif de mise en température (102; 202; 302) étant réalisé et/ou configuré de manière telle, que des préformes qui ont été fabriquées en un cycle du dispositif de fabrication de préformes (101; 201), puissent être mises en température différemment,
**caractérisée en ce que** l'installation comprend, en outre, un élément de mesure pour déterminer la température d'une préforme, le dispositif de mise en température (102; 202; 302) étant réalisé et/ou configuré de façon telle, que la mise en température de la préforme soit effectuée dans le dispositif de mise en température (102; 202; 302) en fonction de la température ayant été déterminée.

2. Installation selon la revendication 1, dans laquelle le dispositif de mise en température (102; 202; 302) est réalisé et/ou configuré de façon telle, que la mise en température de préformes qui ont été fabriquées en un cycle du dispositif de fabrication de préformes (101; 201), soit effectuée sur la base de la température des préformes, que celles-ci présentent lors de leur introduction dans le dispositif de mise en température (102; 202; 302).

3. Installation selon l'une des revendications précédentes, dans laquelle le dispositif de mise en température (102; 202; 302) est réalisé sous la forme d'un chauffage à microondes et/ou à laser.

4. Installation selon l'une des revendications précédentes, comprenant, en outre, un accumulateur-tampon (206) pour préformes, l'accumulateur-tampon (206) étant agencé entre le dispositif de fabrication de préformes (101; 201) et le dispositif de mise en température (102; 202; 302).

5. Installation selon la revendication 4, dans laquelle l'accumulateur-tampon (206) est d'une réalisation à isolation thermique.

6. Installation selon l'une des revendications précédentes, comprenant, en outre, un élément de régulation, qui est configuré de manière à réguler le fonctionnement du dispositif de fabrication de préformes (101; 201) et/ou de la machine de soufflage (103; 203; 303) en fonction d'un état de fonctionnement de la machine de soufflage (103; 203; 303).

7. Procédé pour la fabrication de contenants en matière plastique dans une installation destinée à la fabrication de contenants en matière plastique, comprenant un dispositif de fabrication de préformes (101; 201) à fonctionnement par cycles, un dispositif de mise en température (102; 202; 302) pour le conditionnement thermique de préformes fabriquées dans le dispositif de fabrication de préformes (101; 201), et une machine de soufflage (103; 203; 303), le procédé présentant les étapes suivantes :
fabrication d'un nombre prédéterminé de préformes dans le dispositif de fabrication de préformes (101; 201) à marche cyclique ; et
introduction du nombre prédéterminé de préformes dans le dispositif de mise en température (102; 202; 302) pour le conditionnement thermique des préformes, les préformes étant mises en température différemment dans le dispositif de mise en température (102; 202; 302) ; et
étirage-soufflage des préformes dans la machine de soufflage (103; 203; 303), en vue d'obtenir des contenants en matière plastique ;
**caractérisé en ce que**
avant et/ou pendant le réchauffement de la préforme dans le dispositif de mise en température (102; 202; 302), on détermine une température de la préforme, et on effectue la mise en température de la préforme en se basant sur la température ayant été déterminée.

8. Procédé selon la revendication 7, d'après lequel dans le cas d'un défaut sur la machine de soufflage (103; 203; 303), les préformes fabriquées par le dispositif de fabrication de préformes (101; 201) fonctionnant par cycles, sont amenées dans un accumulateur-tampon (206).

9. Procédé selon l'une des revendications 7 - 8, d'après lequel dans le cas d'un défaut sur la machine de soufflage (103; 203; 303), on modifie au moins un paramètre de fonctionnement du dispositif de fabrication de préformes (101; 201) fonctionnant par cycles.

10. Procédé selon la revendication 8 ou la revendication 9, d'après lequel après avoir remédié à un défaut sur la machine de soufflage (103; 203; 303), on fait fonctionner la machine de soufflage (103; 203; 303) avec une productivité réduite jusqu'à ce que toutes les préformes stockées dans l'accumulateur-tampon (206) ait été traitées.
